# FASCICULE DE BREVET EUROPEEN

(11) **EP 3 755 943 B1**
(45) Date de publication et mention de la délivrance du brevet: **28.09.2022**
(21) Numéro de dépôt: 19711968.8
(22) Date de dépôt: 19.02.2019
(51) Int. Cl.: F21S 43/237, F21S 43/239, F21S 43/245, F21S 43/249, F21S 43/247, F21S 43/50, F21S 43/20, F21V 8/00, F21S 43/40, B60Q 1/26, F21S 43/30, F21S 43/31, F21S 43/33, F21S 41/40, F21S 41/43, F21V 5/00, B60Q 1/00, F21V 11/14

(54) **DISPOSITIF DE SIGNALISATION POUR VÉHICULE AUTOMOBILE COMPRENANT UN ÉCRAN OPAQUE PERMETTANT LE PASSAGE D'UNE PLUS GRANDE QUANTITÉ DE LUMIÈRE ÉMISE PAR UNE SOURCE DE LUMIÈRE DISSIMULÉE DERRIÈRE LEDIT ÉCRAN**
SIGNALISIERUNGSVORRICHTUNG FÜR EIN KRAFTFAHRZEUG MIT EINEM LICHTUNDURCHLÄSSIGEN BILDSCHIRM, DER VON EINER GRÖSSEREN LICHTMENGE DURCHDRUNGEN WERDEN KANN, DIE VON EINER HINTER DEM BILDSCHIRM VERBORGENEN LICHTQUELLE EMITTIERT WIRD
SIGNALING DEVICE FOR A MOTOR VEHICLE, COMPRISING AN OPAQUE SCREEN THAT CAN BE PENETRATED BY A GREATER AMOUNT OF LIGHT EMITTED BY A LIGHT SOURCE CONCEALED BEHIND SAID SCREEN

(30) Priorité: 19.02.2018 FR 1851412; 07.03.2018 FR 1851979
(43) Date de publication de la demande: 30.12.2020
(73) Titulaire: Marelli Automotive Lighting France, 89330 Saint-Julien-du-Sault (FR)
(72) Inventeur: BUISSON, Alain, 78190 TRAPPES (FR); PATTERSON, Sean, 78190 TRAPPES (FR)
(74) Mandataire: Jacobacci Coralis Harle
(86) Numéro de dépôt international: PCT/FR2019/050378
(87) Numéro de publication internationale: WO 2019/158890

(56) Documents cités:
- EP-A1- 0 180 145
- EP-A1- 1 541 920
- EP-B1- 1 541 920
- DE-A1- 3 402 473
- DE-A1- 19 753 762
- DE-A1-102013 021 086
- US-A1- 2004 130 904

## Description

### DOMAINE TECHNIQUE AUQUEL SE RAPPORTE L'INVENTION

La présente invention concerne un dispositif de signalisation pour un véhicule automobile, comprenant un écran opaque permettant le passage d'une plus grande quantité de lumière, émise par une source de lumière dissimulée derrière l'écran opaque.

### ARRIERE-PLAN TECHNOLOGIQUE

Il est connu de l'état de la technique le fait de dissimuler une source de lumière derrière un écran opaque, comportant des passages afin de laisser passer une partie seulement de la lumière émise par ladite source. Ce type dispositif permet d'obtenir des surfaces sensiblement homogènes, comportant plusieurs points lumineux éclairant l'avant d'un dispositif de signalisation. Cet agencement est particulièrement prisé par les concepteurs de dispositif de signalisation pour véhicule automobile, afin de donner un style propre à un dispositif lumineux. À titre d'exemple, les passages peuvent être agencés à travers l'écran opaque de manière à former un motif lumineux représentant un signe distinctif d'une marque automobile.

Ce type d'agencement présente toutefois l'inconvénient de perdre une grande quantité de l'intensité lumineuse émise par la source de lumière au niveau de l'écran opaque. En effet, seule une partie minime de l'intensité lumineuse passe à travers l'écran opaque par l'intermédiaire des passages. De ce fait, pour compenser cette perte d'intensité, il est nécessaire d'augmenter la puissance initiale de la source de lumineuse, ou bien de prévoir des sources lumineuses d'appoint afin que le dispositif de signalisation puisse répondre aux normes en vigueur concernant l'éclairage.

La présente invention vise à résoudre cette problématique, en proposant un dispositif lumineux pour véhicule automobile, comprenant un écran opaque dissimulant une source de lumière à un observateur, tout en permettant à une plus grande quantité de lumière émise par ladite source de passer à travers l'écran opaque.

### OBJET DE L'INVENTION

L'invention concerne un dispositif de signalisation pour véhicule automobile, comprenant un écran opaque comportant des passages reliant une face avant à une face arrière dudit écran. De préférence, les faces avant et arrière sont parallèles ou sensiblement parallèles entre elles. Le dispositif de signalisation comporte également une première source de lumière apte à émettre un premier faisceau lumineux éclairant plusieurs passages au niveau de la face arrière de l'écran opaque.

L'invention se caractérisé d'un dispositif de signalisation selon la revendication 1.

Autrement dit, le moyen de focalisation est configuré pour modifier la forme du premier faisceau lumineux, en amont de l'écran opaque, de sorte qu'entre 80% et 95% de son intensité lumineuse passe à travers l'écran opaque, en se propageant dans les passages reliant la face avant à la face arrière dudit écran. Ainsi, de façon avantageuse, l'écran opaque permet de dissimuler la première source de lumière à un observateur du dispositif de signalisation, en atténuant très légèrement l'intensité lumineuse de ladite source de lumière.

Selon une variante de réalisation, le moyen de focalisation est configuré pour fractionner le premier faisceau lumineux en plusieurs sous-faisceaux lumineux distincts, et chaque sous-faisceau lumineux converge dans un passage. Le moyen de focalisation sépare le premier faisceau lumineux en un nombre suffisant de sous faisceaux lumineux pour que chaque sous-faisceau lumineux puisse se propager à travers un passage, en conservant sensiblement la même intensité lumineuse.

Selon une variante de réalisation, chaque sous-faisceau lumineux converge à l'entrée d'un passage, selon un angle de convergence compris entre 3° et 45°, de préférence entre 5° et 25°.

Selon une variante de réalisation, chaque passage débouche sur la face avant de l'écran opaque, au niveau d'une sortie, et la surface totale des sorties est inférieure à 55% de la surface totale de la face avant, de préférence entre 20% et 5% de ladite surface.

Selon une variante de réalisation, la plus grande dimension de chaque sortie est comprise entre 0,05 mm et 2 mm, de préférence entre 0,1 mm et 0,3 mm.

Selon une variante de réalisation, la distance entre le centre de deux sorties adjacentes, est comprise entre 0,1 mm et 6 mm, de préférence entre 0,3 mm et 0,9 mm. Selon un autre mode de réalisation, une sortie est entourée par plusieurs sorties adjacentes, situées à une même distance de ladite sortie. Une sortie peut ainsi être entourée par un nombre de sorties compris entre trois et huit sorties adjacentes, de préférence par six autres sorties adjacentes.

Selon une variante de réalisation, chaque sous-faisceau lumineux est inscrit dans un passage. On limite ainsi les phénomènes de perte d'intensité lumineuse de chaque sous-faisceau lumineux, dus notamment à des phénomènes de réflexion sur les parois internes des passages.

Selon une variante de réalisation, au niveau de la face arrière de l'écran opaque, chaque passage forme une entrée de forme ovale, de préférence de forme circulaire. La plus petite dimension d'une entrée est de préférence supérieure à la plus petite dimension de la sortie du même passage. De préférence, les dimensions de chaque passage se réduisent entre son entrée et sa sortie.

Selon l'invention, le moyen de focalisation comporte :
- un premier dioptre optique, agencé en vis-à-vis de la première source de lumière, de manière à ce que les rayons lumineux composant le premier faisceau lumineux se propagent parallèlement ou sensiblement parallèlement entre eux, en aval du premier dioptre optique ; et
- un deuxième dioptre optique, agencé entre le premier dioptre optique et l'écran opaque, de manière à fractionner le premier faisceau lumineux en plusieurs sous-faisceaux lumineux.

Selon une variante de réalisation, le premier dioptre optique comporte une face arrière, éclairée par la première source de lumière, comportant au moins une lentille de Fresnel centrée sur un dispositif lumineux composant la première source de lumière.

Selon une variante de réalisation, une face avant du deuxième dioptre optique est située en vis-à-vis, et à une distance de la face arrière de l'écran opaque comprise entre 0 et 0,05 mm.

Selon l'invention, le deuxième dioptre optique comporte plusieurs protubérances, au niveau de sa face avant, chaque protubérance comble un passage de l'écran opaque. Selon un mode de réalisation préféré, au moins une protubérance émerge de la face avant de l'écran opaque.

Selon une variante de réalisation, le premier dioptre optique et le deuxième dioptre optique forment une seule pièce. De préférence, le premier dioptre et le deuxième dioptre optique sont obtenus par un procédé de moulage. Par exemple, le premier dioptre et le deuxième dioptre optique peuvent être moulés séparément avant d'être assemblés ensemble par des moyens connus.

Selon une variante de réalisation, l'écran opaque est composé de plusieurs sous-écrans, de préférence décalés entre eux de sorte que la face avant de l'écran opaque est en relief ou en trois dimensions. Selon un mode de réalisation préféré, le contour de chaque sous-écran opaque délimite une forme hexagonale, carrée ou triangulaire.

Selon une variante de réalisation, la première source de lumière comporte plusieurs dispositifs lumineux distincts. De préférence, la première source de lumière comporte plusieurs diodes électroluminescentes alignées sur un même plan. Les diodes électroluminescentes peuvent former un motif identique ou sensiblement identique, au motif formé par les entrées au niveau de la face arrière de l'écran opaque. Le nombre d'entrées est supérieur au nombre de diodes électroluminescentes. L'écart entre deux diodes adjacentes peut être compris entre 4 mm et 100 mm, de préférence de l'ordre de 10 mm.

Selon une variante de réalisation, un dispositif de signalisation selon l'invention comprend un guide de lumière, agencé en vis-à-vis de la face avant de l'écran opaque, de manière à ce que la première source de lumière puisse éclairer ledit guide de lumière, et en ce que le guide de lumière est translucide. Selon une variante de réalisation, le dispositif de signalisation comporte une deuxième source de lumière, agencé en vis-à-vis d'une face latérale du guide de lumière, pour permettre la propagation d'un deuxième faisceau lumineux émis par la deuxième source de lumière entre une face avant et une face arrière du guide de lumière. La face arrière du guide de lumière peut être éclairée par la première source de lumière.

Selon un mode de réalisation préféré, la face avant de l'écran opaque est de couleur claire et favorise une réflexion diffuse d'une lumière provenant du guide de lumière, de préférence la face avant de l'écran de réflexion est de couleur blanche et d'aspect mat.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également un véhicule automobile comprenant l'un des dispositifs de signalisation décrits ci-dessus.

### DESCRIPTION DES FIGURES

La description qui va suivre en regard des dessins annexés suivants, donnés à titre d'exemples non limitatifs, permettra de mieux comprendre en quoi consiste l'invention et comment elle peut être réalisée :
- la figure 1 ne fait pas partie de l'invention illustre une coupe transversale d'un premier mode de réalisation d'un dispositif de signalisation ;
- la figure 2 ne fait pas partie de l'invention illustre une vue de la face arrière d'un écran opaque du dispositif de signalisation représenté à la figure 1 ;
- la figure 3 ne fait pas partie de l'invention illustre une coupe longitudinale d'un écran opaque représenté à la figure 2 ;
- la figure 4 ne fait pas partie de l'invention illustre une coupe transversale du dispositif de signalisation représenté à la figure 1, lorsque la source de lumière est allumée ;
- les figures 5 et 6 font partie de l'invention et illustrent une coupe transversale d'un deuxième mode de réalisation d'un dispositif de signalisation, respectivement éteint et allumé ;
- les figures 7 et 8 ne font pas partie de l'invention illustrent une coupe transversale d'un troisième mode de réalisation d'un dispositif de signalisation, respectivement éteint et allumé ;
- la figure 9 ne fait pas partie de l'invention illustre une coupe transversale d'un quatrième mode de réalisation d'un dispositif de signalisation allumé ;
- la figure 10 illustre une coupe transversale d'un cinquième mode de réalisation d'un dispositif de signalisation allumé selon l'invention, combinant les caractéristiques du deuxième et quatrième mode de réalisation ;
- la figure 11 illustre une vue d'une face arrière d'un écran opaque d'un dispositif de signalisation représenté à la figure 1, selon une sixième variante de réalisation ;
- la figure 12 illustre une coupe latérale d'un écran opaque représenté à la figure 11.

### DESCRIPTION DETAILLEE D'UN EXEMPLE DE REALISATION

Pour rappel, l'invention propose un dispositif de signalisation pour un véhicule automobile, comprenant un écran opaque dissimulant une source de lumière à un observateur, tout en permettant à une plus grande quantité de lumière émise par ladite source de passer à travers l'écran opaque.

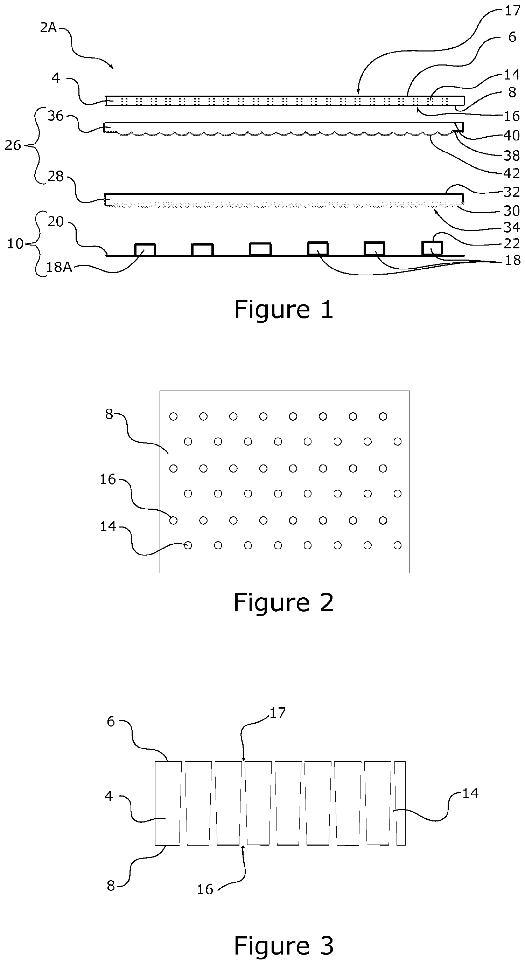

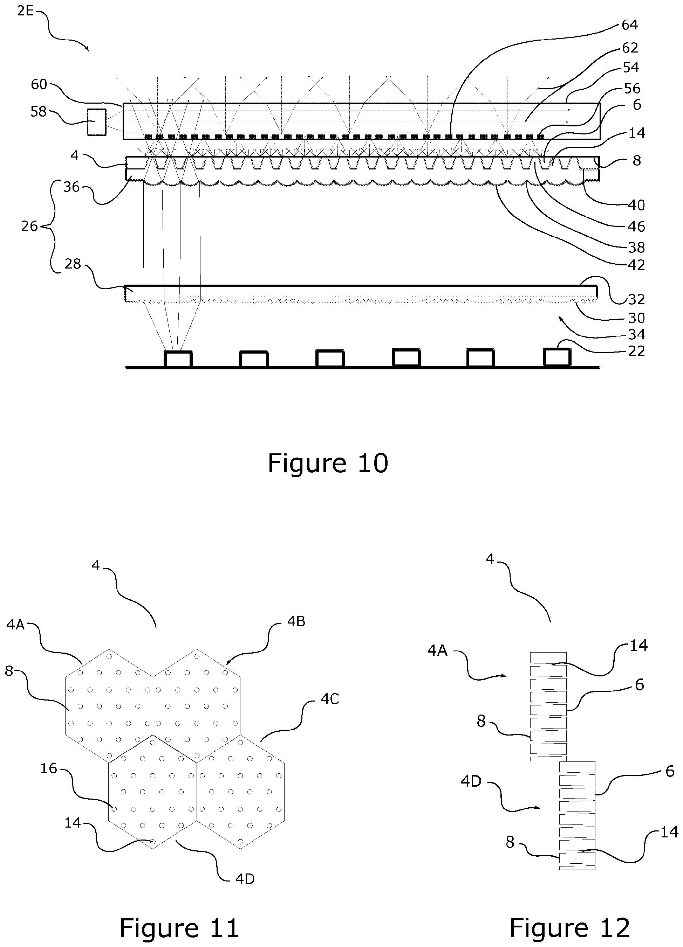

Les figures 1 à 4 ne font pas partie de l'invention illustrent un premier mode de réalisation d'un dispositif de signalisation 2A. Ce dispositif de signalisation comporte un écran opaque 4 délimité par une face avant 6, parallèle ou sensiblement parallèle à une face arrière 8. L'écran opaque est de forme plane. Toutefois, cet exemple de réalisation n'est pas limitatif dans le sens où l'écran opaque 4 pourrait comporter des parties de forme concave et/ou convexe, ou bien des sous-parties décalées les unes par rapport aux autres comme illustré par la figure 12. L'écran opaque a une épaisseur comprise entre 0,5 mm et 2 mm, de préférence de l'ordre de 0,8 mm à 1 mm. Par le terme « épaisseur », on entend la plus petite distance séparant la face avant 6 et la face arrière 8 de l'écran opaque. Selon le présent exemple, l'écran opaque 4 est moulé à partir de poly(méthacrylate de méthyle)(PMMA) ou à partir de polycarbonate (PC).

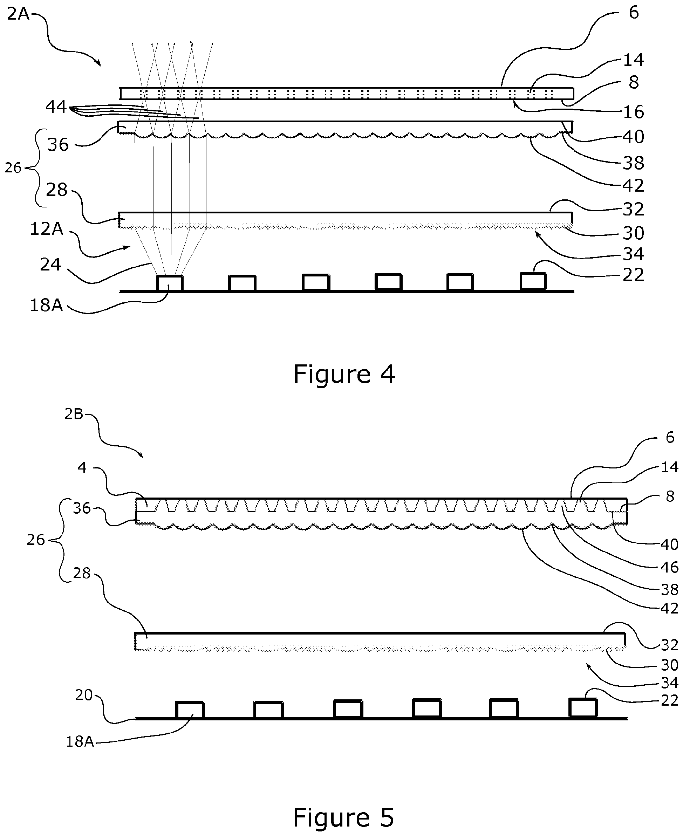

L'écran opaque est configuré ou traité de manière à être opaque aux faisceaux lumineux émis par une première source de lumière 10. L'écran opaque est positionné devant la première source de lumière, de sorte à dissimuler ladite source à un observateur regardant la face avant 6 de l'écran opaque. Comme illustré par la figure 4, afin de permettre le passage d'un premier faisceau lumineux 12, émis par la première source de lumière, l'écran opaque comporte des passages 14 reliant sa face avant 6 à sa face arrière 8. Chaque passage 14 traverse l'écran opaque selon une direction perpendiculaire ou sensiblement perpendiculaire à sa face arrière 8. Les dimensions des passages sont choisies de sorte qu'un observateur ne puisse pas percevoir la globalité de la première source de lumière, à travers un ou plusieurs passages 14.

Comme illustré par la figure 2, la face arrière 8 de l'écran opaque délimite, pour chaque passage 14, les contours d'une entrée 16 débouchant sur ladite face. Les entrées 16 sont de forme elliptique, leur plus petite dimension est comprise entre 0,15 mm et 0,25 mm. Selon le présent exemple, les entrées 16 sont de forme circulaire et leur diamètre est de l'ordre de 0,2 mm. Les entrées 16 sont de préférence de forme et de dimensions identiques, réparties de façon uniforme sur la face arrière 8. L'écart entre les centres de deux entrées adjacentes est compris entre 0,35 mm et 0,45 mm, de préférence de l'ordre de 0,4 mm. Selon le présent exemple, chaque entrée est entourée par six autres entrées, éloignées de la même distance du centre de ladite entrée.

Chaque passage 14 débouche sur la face avant 6 de l'écran opaque, au niveau d'une sortie 17. Les sorties 17 sont de forme elliptique, leur plus petite dimension est comprise entre 0,1 mm et 0,3 mm. De préférence, les dimensions des sorties 17 sont inférieures aux dimensions des entrées 16. Selon le présent exemple illustré à la figure 3, les sorties 17 sont de forme identique aux entrées 16. Le diamètre des sorties 17 est de l'ordre de 0,2 mm. En d'autres termes, la surface totale des sorties 17 représente entre 1% et 20% de la surface totale de la face avant 6 de l'écran opaque, de préférence de l'ordre de 10%. De façon avantageuse, les dimensions des sorties 17 sont choisies pour être peu ou pas visibles pour un observateur situé à une distance de l'ordre d'un mètre de l'écran opaque. De ce fait, la face avant 6 de l'écran opaque apparaît comme homogène à la lumière du jour, lorsque la première source de lumière 10 est éteinte.

Comme illustré par la figure 4, la première source de lumière 10 comporte un ensemble de diodes électroluminescentes 18 pour éclairer l'écran opaque 4. Les diodes électroluminescentes sont disposées sur un même support 20 positionné en vis-à-vis de la face arrière 8 de l'écran opaque 4. La surface d'émission 22 de chaque diode électroluminescente est éloignée de la face arrière 8, d'une distance comprise entre 12 mm et 50 mm, de préférence entre 22 mm et 30 mm. Les diodes électroluminescentes sont réparties sur le support 20 de manière à former un motif similaire ou sensiblement similaire à celui formé par les entrées 16 sur la face arrière 8 de l'écran opaque 4. La distance entre les centres de deux diodes électroluminescentes adjacentes est comprise 4 mm et 100 mm, de préférence de l'ordre de 10,6 mm. Selon le présent exemple, chaque diode électroluminescente 18A émet indépendamment des autres diodes électroluminescentes, un premier faisceau lumineux 12A sous la forme d'un cône d'émission 24. Le cône d'émission se caractérise par un angle à son sommet qui est compris entre 30° et 60°, de préférence entre 30° et 40°. Afin de permettre une meilleure compréhension de l'invention par le lecteur, le fonctionnement d'une seule diode électroluminescente 18A est illustré sur les figures annexées.

Un moyen de focalisation 26 est interposé entre les diodes électroluminescentes 18 et la face arrière 8 de l'écran opaque. Le moyen de focalisation 26 comprend un premier dioptre optique 28, comportant une face arrière 30 en vis-à-vis des diodes électroluminescentes et une face avant 32 en regard de l'écran opaque 4. La face arrière 30 et la face avant 32 sont parallèles ou sensiblement parallèles entre elles. Le premier dioptre optique 28 comporte au niveau de sa face arrière 30 des lentilles de Fresnel 34. La surface d'émission 22 de chaque diode électroluminescente est éloignée de la face arrière 30 du premier dioptre optique 28, d'une distance comprise entre 5 mm et 22 mm, de préférence entre 18 mm et 22 mm. Chaque lentille de Fresnel 34 est alignée avec une diode électroluminescente 18A, afin que les premiers faisceaux lumineux 12A émis par ladite diode se propagent parallèlement ou sensiblement parallèlement entre eux, en aval du premier dioptre optique 28.

Un deuxième dioptre optique 36 est interposé entre le premier dioptre optique 28 et la face arrière 8 de l'écran opaque 4. Ce deuxième dioptre optique 36 comporte une face arrière 38 en vis-à-vis du premier dioptre optique 28, et une face avant 40 en regard de l'écran opaque 4. Les faces arrière et avant du deuxième dioptre optique 36 sont parallèles ou sensiblement parallèles entre elles. La plus grande distance entre lesdites faces est comprise entre 1,5 mm et 2 mm. La plus petite distance entre la face avant 32 du premier dioptre optique 28 et la face arrière 38 du deuxième dioptre optique 36, est comprise entre 0,5 mm et 40 mm, de préférence entre 0 ,5 mm à 1 mm. La face arrière 38 du deuxième dioptre optique comporte des lentilles convergentes 42 à sa surface. Selon le présent exemple, chaque lentille convergente 42 est agencée de sorte à faire converger des rayons lumineux provenant du premier dioptre optique 28, en plusieurs sous-faisceaux lumineux 44 distincts qui convergent selon un angle de convergence compris entre 3° et 45°, de préférence entre 5° et 25°. Chaque sous-faisceau lumineux 44 est ainsi focalisé au niveau d'une entrée 16 d'un passage de l'écran opaque, de sorte à s'inscrire dans ladite entrée, de préférence à s'inscrire également dans toute la longueur du passage 14.

Selon le présent exemple, le premier dioptre optique 28 et le deuxième dioptre optique 36 sont tous deux réalisés par une technique de moulage, à partir d'un matériau du type poly(méthacrylate de méthyle)(PMMA) ou polycarbonate (PC). Les indices optiques du premier et du deuxième dioptre optique sont similaires et de l'ordre de 1,70.

Grâce à l'invention, le moyen de focalisation 26 composé du premier dioptre optique 28 et du deuxième dioptre optique 36, permet de fractionner un premier faisceau lumineux 12A émis par chaque diode électroluminescente 18A, en plusieurs sous-faisceaux lumineux 44 aptes à passer à travers les passages 14 de l'écran opaque. Ainsi, entre 80% et 95% de l'intensité lumineuse de chaque premier faisceau lumineux 12A, passe à travers l'écran opaque par l'intermédiaire de plusieurs passages 14, dont les dimensions ne permettent pas à un observateur de distinguer la globalité de la première source de lumière 10.

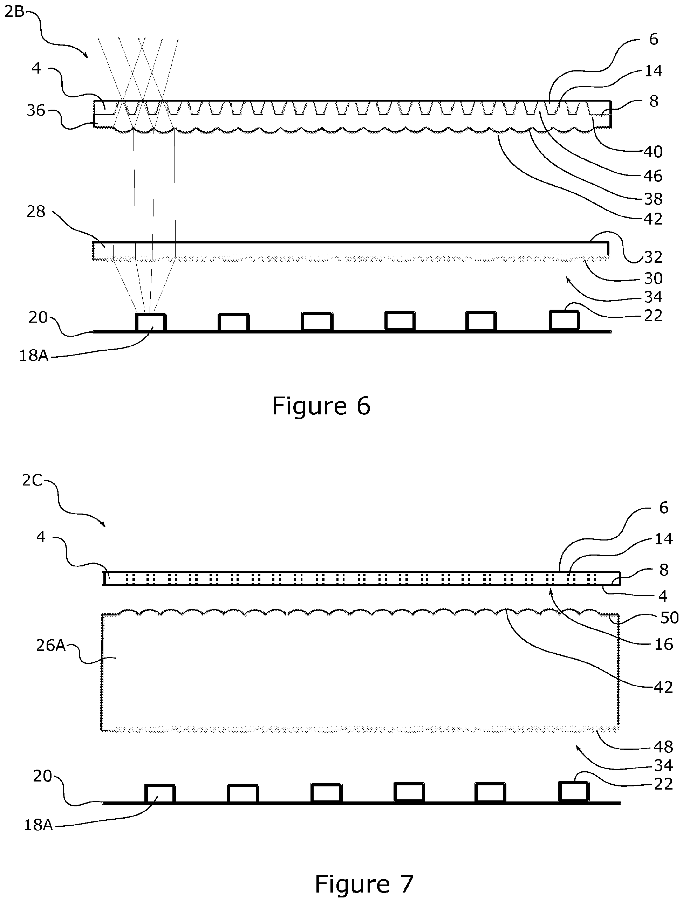

Les figures 5 et 6 font partie de l'invention et illustrent à présent un deuxième mode de réalisation d'un dispositif de signalisation 2B. Ce dispositif de signalisation 2B se distingue du dispositif de signalisation 2A en ce que la face avant 40 du deuxième dioptre optique 36 est en contact avec la face arrière 8 de l'écran opaque 4. Les éléments identiques entre les différents modes et variantes de réalisation de l'invention, sont identifiés ci-après par les mêmes références. La plus grande distance entre la face avant 40 et la face arrière 38 du deuxième dioptre optique 36 est plus importante par rapport au mode de réalisation précédent, afin que les lentilles convergentes 42 soient sensiblement à la même distance de la face arrière 8 de l'écran opaque dans ces deux modes de réalisations. Selon le présent exemple, la plus grande distance entre les faces avant et arrière du deuxième dioptre optique 36 varie entre 2 mm et 4 mm, de préférence entre 2,3 mm et 2, 7 mm.

Selon une autre particularité de ce deuxième mode de réalisation, la face avant 6 du deuxième dioptre optique 36 comporte des protubérances 46 s'insérant ou comblant chaque passage 14 de l'écran opaque 4. La forme extérieure des protubérances 46 est complémentaire à la forme interne des passages 14, afin de favoriser un meilleur maintien mécanique entre ces éléments. Selon un autre avantage, les protubérances permettent un alignement simple et précis, entre chaque lentille convergente 42 et chaque passage 14, afin de s'assurer que les sous-faisceaux lumineux 44 s'inscrivent bien dans chaque passage.

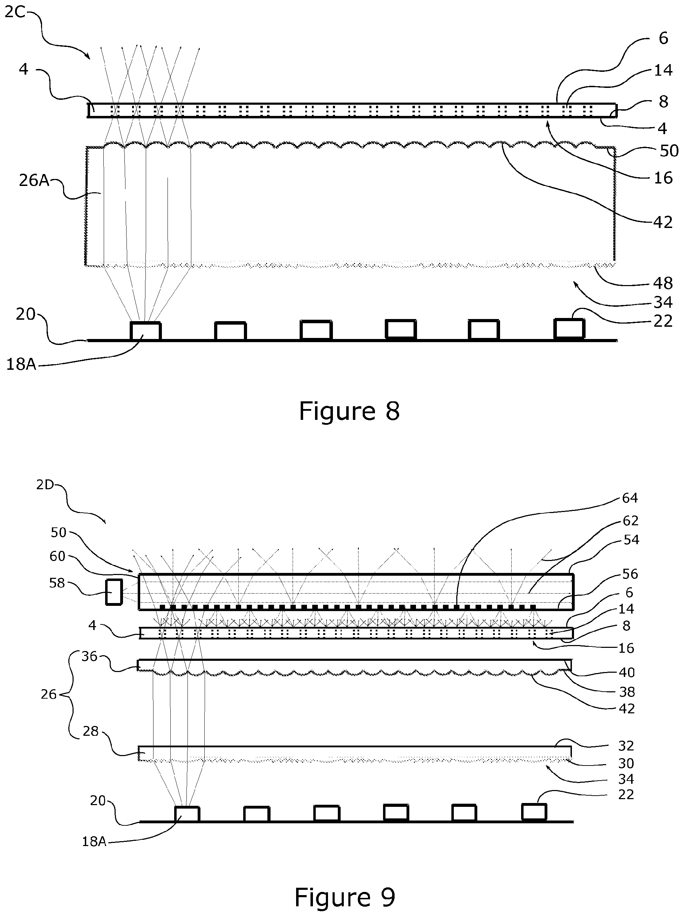

Les figures 7 et 8 font partie de l'invention et illustrent un troisième mode de réalisation d'un dispositif de signalisation 2C. Ce dispositif de signalisation 2C se distingue du dispositif de signalisation 2A en ce que le premier dioptre optique 28 et le deuxième dioptre optique 36 forment à présent une seule et même pièce de focalisation 26A, de préférence moulée. Le moyen de focalisation 26A comporte une face arrière 48 en vis-à-vis des diodes électroluminescentes 18, comprenant plusieurs lentilles de Fresnel 34 telles que décrites ci-dessus. La surface d'émission 22 de chaque diode électroluminescente est éloignée de la face arrière 48 du dioptre optique 26A, d'une distance comprise entre 5 mm et 22 mm, de préférence entre 18 mm et 22 mm. Le moyen de focalisation 26A comprend également une face avant 50, en vis-à-vis de la face arrière 8 de l'écran opaque 4, comprenant des lentilles convergentes 42. Une lentille convergente 42 est alignée avec une lentille de Fresnel 34, afin que les sous-faisceaux lumineux 44 émergeant du moyen de focalisation 26A, se focalisent au niveau d'une entrée 16 d'un passage 14 de l'écran opaque. Chaque sous-faisceau lumineux 44 converge ainsi à l'entrée d'un passage, de manière à s'inscrire au niveau de son entrée 16, de préférence à s'inscrire également dans toute la longueur du passage. Selon le présent exemple, chaque sous-faisceau lumineux 44 converge au niveau de l'entrée d'un passage, selon un angle de convergence compris entre 3° et 45°, de préférence entre 5° et 25°.

Selon une variante de réalisation du dispositif de signalisation 2A décrit ci-dessus, un dispositif de signalisation 2D illustrée par la figure 9 et qui ne fait pas partie de l'invention comporte un guide de lumière 50 agencé en vis-à-vis de la face avant 6 de l'écran opaque. Ce guide de lumière 50 est délimité par une face avant 54, parallèle ou sensiblement parallèle à une face arrière 56. Les faces avant et arrière sont reliées entre elles par des faces latérales qui délimitent le contour du guide de lumière 50. Le guide de lumière est de forme plane. Toutefois, cet exemple de réalisation n'est pas limitatif de l'invention, dans le sens où le guide de lumière 50 pourrait comporter des parties de forme concave et/ou convexe. Le guide de lumière 50 est formé à partir d'un matériau transparent, laissant passer la lumière du jour en permettant de distinguer nettement les contours et la couleur de l'écran opaque 4. À titre d'exemple, le guide de lumière 50 peut être formé à partir de poly(méthacrylate de méthyle)(PMMA) et avoir une épaisseur comprise entre 1 mm et 5 mm, de préférence de l'ordre de 3 mm. Par le terme « épaisseur », on entend la plus petite distance entre la face avant 6 et la face arrière 8 du guide de lumière.

Le dispositif de signalisation 2D comporte une deuxième source de lumière 58, agencé en vis-à-vis d'une face latérale du guide de lumière 4 dénommée par la suite face latérale d'entrée 60. Comme illustré par la figure 9, la deuxième source de lumière 58 est orientée pour permettre la propagation d'un deuxième faisceau lumineux 62 émis par ladite source de lumière, entre la face avant 54 et la face arrière 56 du guide de lumière. La deuxième source de lumière 58 peut comporter une ou plusieurs diodes électroluminescentes, chaque diode éclairant une partie de la face latérale d'entrée 60. De préférence, les diodes électroluminescentes sont espacées afin d'éclairer de façon homogène la face latérale d'entrée 60. La couleur et l'intensité lumineuse de chaque diode électroluminescente peuvent être modifiées au cours du temps afin de créer des animations lumineuses dans le guide de lumière 50.

Afin de favoriser une plus grande diffusion du deuxième faisceau lumineux 62, à travers la face avant 54 et la face arrière 56 du guide de lumière 50, des éléments de diffusion de la lumière sont présents dans le guide de lumière 50. Ces éléments de diffusion comprennent des cavités 64 ouvertes sur la face arrière 56 du guide de lumière. Les cavités 64 sont positionnées dans le guide de lumière 50 pour, d'une part, rendre translucide le guide de lumière, et d'autre part, favoriser une diffusion sensiblement homogène d'un faisceau lumineux à travers la face avant 6. Par le terme « translucide », on entend la propriété pour le guide de lumière 50 de laisser passer les faisceaux lumineux de la lumière du jour, sans qu'il soit possible de distinguer nettement à travers sa face avant 54, les contours ou la couleur de l'écran opaque 4.

Chaque cavité 64 délimite un volume interne qui est compris entre 48 000 µm³ et 536 000 µm³, de préférence entre 95 000 µm³ et 268 000 µm³. Selon le présent exemple, chaque cavité à un volume de l'ordre de 218 000 µm³. Les cavités sont agencées de manière à être espacées au niveau de la face arrière 56 du guide de lumière 50, d'une distance comprise entre 0,12 mm et 0,7 mm, de préférence entre 0,13 mm et 0,5 mm. Selon le présent exemple, les cavités 64 sont de forme conique, leur base étant délimitée par la face arrière 56 du guide de lumière, leur sommet formant un angle de l'ordre de 60°, leur hauteur étant de l'ordre de 0,05 mm et le diamètre de leur base de l'ordre de 0,1 mm.

Afin d'augmenter l'intensité du deuxième faisceau lumineux 60 diffusé à travers la face avant 6 du guide de lumière 50, l'écran opaque 4 est placé en vis-à-vis et à distance de sa face arrière 56. L'écart entre l'écran opaque 4 et le guide de lumière 50 est compris entre 0,05 mm et 0,15 mm, de préférence de l'ordre de 0,1 mm. La face avant 6 de l'écran opaque 4 est parallèle ou sensiblement parallèle à la face arrière 56 du guide de lumière 50. De façon avantageuse, la face avant 6 de l'écran opaque est de couleur blanche et d'aspect mat. La surface de la face avant 6 de l'écran opaque 4 est configurée pour favoriser une réflexion diffuse de la lumière provenant de la face arrière du guide de lumière 50 lorsque celui-ci est éclairé par la deuxième source de lumière 58. Par réflexion diffuse, on entend le fait que la lumière est réfléchie dans toutes les directions avec, éventuellement, une intensité lumineuse plus importante en direction du guide de lumière 50. Selon le présent exemple, la face avant 6 de l'écran opaque est rugueuse de manière à diffuser la lumière de façon lambertienne.

Ce mode de réalisation permet avantageusement d'obtenir un dispositif de signalisation dont l'épaisseur, mesurée entre le support 20 et la face avant 54 du guide de lumière, est inférieure à 30 mm, de préférence inférieure à 25 mm. On peut ainsi obtenir un dispositif de signalisation très compact et aisément intégrable dans des boîtiers optiques de plus petites dimensions.

Selon un autre mode de réalisation 2E d'un dispositif de signalisation selon l'invention, les caractéristiques du deuxième et quatrième mode de réalisation peuvent être combinés ensemble, afin de réaliser un cinquième mode de réalisation illustré par la figure 10.

Selon une sixième variante de réalisation du dispositif de signalisation 2A décrit ci-dessus, l'écran opaque 4 peut comprendre plusieurs sous-écrans opaques 4A, 4B, 4C et 4D, assemblés selon les figures 11 et 12. Le contour de chaque sous-écran opaque est configuré pour permettre sa juxtaposition avec d'autres sous-écrans opaques. Selon le présent exemple, le contour de chaque sous-écran est de forme hexagonale. Bien entendu, le présent exemple de réalisation ne se limite pas à ce seul mode de réalisation, de sorte que le contour de chaque sous-écran opaque pourrait être de forme triangulaire, carrée ou autre. Toutefois, la forme hexagonale offre l'avantage de permettre un auto alignement des passages 14 entre les sous-écrans opaques, lors de leur assemblage, afin que le motif formé par les sorties 17 soit identiques sur toute la face avant de l'écran opaque 4. Ce mode de réalisation permet également de décaler les faces avant 6, les unes par rapport aux autres, de manière à ce que l'écran opaque présente des reliefs. Selon le présent exemple illustré par la figure 11, la face avant 6 du sous-écran 4A est en retrait par rapport à la face avant du sous-écran 4D.

## Revendications

1. Dispositif de signalisation (2A, 2B, 2C, 2D, 2E) pour véhicule automobile, comprenant un écran opaque (4) comportant des passages (14) reliant une face avant (6) à une face arrière (8) dudit écran, une première source de lumière (10) apte à émettre un premier faisceau lumineux (12A) éclairant plusieurs passages (14) au niveau de la face arrière (8) de l'écran opaque (4), un moyen de focalisation (26) du premierfaisceau lumineux (12A), interposé entre la première source de lumière (10) et l'écran opaque (4), pour permettre la transmission entre 80% et 95% de l'intensité lumineuse du premier faisceau lumineux (12A) à travers les passages (14), le moyen de focalisation (26) comportant :
- un premier dioptre optique (28), agencé en vis-à-vis de la première source de lumière (10), de manière à ce que les rayons lumineux composant le premier faisceau lumineux (12A) se propagent parallèlement ou sensiblement parallèlement entre eux, en aval du premier dioptre optique (28) ; et
- un deuxième dioptre optique (36), agencé entre le premier dioptre optique (28) et l'écran opaque (4), de manière à fractionner le premier faisceau lumineux (12A) en plusieurs sous-faisceaux lumineux (44),
**caractérisé en ce que**
le deuxième dioptre optique (36) comporte plusieurs protubérances (46), au niveau de sa face avant (6), chaque protubérance comblant un passage (14) de l'écran opaque (4).

2. Dispositif de signalisation (2A, 2B, 2C, 2D, 2E) selon la revendication 1, **caractérisé en ce que** le moyen de focalisation (26) est configuré pour fractionner le premier faisceau lumineux (12A) en plusieurs sous-faisceaux lumineux (44) distincts, et chaque sous-faisceau lumineux converge dans un passage (14).

3. Dispositif de signalisation (2A, 2B, 2C, 2D, 2E) selon la revendication 2, caractérisé en ce chaque sous faisceaux lumineux (44) converge à une entrée (16) d'un passage (14), selon un angle de convergence compris entre 3° et 45°, de préférence entre 5° et 25°.

4. Dispositif de signalisation (2A, 2B, 2C, 2D, 2E) selon l'une des revendications 1 à 3, **caractérisé en ce que** chaque passage (14) débouche sur la face avant (6) de l'écran opaque (4), au niveau d'une sortie (17), et la surface totale des sorties (17) est inférieure à 55% de la surface totale de la face avant (6), de préférence comprise entre 20% et 5% de ladite surface.

5. Dispositif de signalisation (2A, 2B, 2C, 2D, 2E) selon la revendication 4, **caractérisé en ce que** la plus grande dimension de chaque sortie (17) est comprise entre 0,05 mm et 2 mm, de préférence entre 0,1 mm et 0,3 mm.

6. Dispositif de signalisation (2A, 2B, 2C, 2D, 2E) selon l'une des revendications 1 à 5, **caractérisé en ce que** la distance entre le centre de deux sorties (17) adjacentes, est comprise entre 0,1 mm et 6 mm, de préférence entre 0,3 mm et 0,9 mm.

7. Dispositif de signalisation (2A, 2B, 2C, 2D, 2E) selon l'une des revendications 1 à 6, caractérisé en ce chaque sous faisceaux lumineux (44) est inscrit dans un passage (14).

8. Dispositif de signalisation (2A, 2B, 2D, 2E) selon l'une des revendications 1 à 7, **caractérisé en ce que** le premier dioptre optique (28) comporte une face arrière (30), éclairée par la première source de lumière (10), comportant au moins une lentille de Fresnel centrée (34) sur un dispositif lumineux composant la première source de lumière (10).

9. Dispositif de signalisation (2C) selon l'une des revendications 1 à 8, **caractérisé en ce que** le premier dioptre optique (28) et le deuxième dioptre optique (36) forment une seule pièce (26A).

10. Dispositif de signalisation (2A, 2B, 2C, 2D, 2E) selon l'une des revendications 1 à 9, **caractérisé en ce que** l'écran opaque (4) est composé de plusieurs sous-écrans (4A, 4B, 4C, 4D), de préférence décalés entre eux de sorte que la face avant (6) de l'écran opaque est en relief.

11. Dispositif de signalisation (2D, 2E) selon l'une des revendications 1 à 10, comprenant un guide de lumière (50), agencé en vis-à-vis de la face avant (6) de l'écran opaque (4), de manière à ce que la première source de lumière (10) puisse éclairer ledit guide de lumière, et en ce que le guide de lumière (50) est translucide.

12. Dispositif de signalisation (2D, 2E) selon la revendication 11, **caractérisé en ce que** la face avant (6) de l'écran opaque (4) est de couleur claire et favorise une réflexion diffuse d'une lumière provenant du guide de lumière (50), de préférence la face avant (6) de l'écran de réflexion est de couleur blanche et d'aspect mat.

13. Véhicule automobile comprenant un dispositif de signalisation (2A, 2B, 2C, 2D, 2E) selon l'une des revendications 1 à 12.

## Patentansprüche

1. Signalisierungsvorrichtung (2A, 2B, 2C, 2D, 2E) für ein Kraftfahrzeug, die einen opaken Bildschirm (4) mit eine Vorderseite (6) mit einer Rückseite (8) verbindenden Durchgängen (14), eine erste Lichtquelle (10), die dazu ausgelegt ist, einen ersten Lichtstrahl (12A) auszustrahlen, der mehrere Durchgänge (14) an der Rückseite (8) des opaken Bildschirms (4) beleuchtet, ein Mittel (26) zum Fokussieren des ersten Lichtstrahls (12A), das zwischen der ersten Lichtquelle (10) und dem opaken Bildschirm (4) angeordnet ist, um eine Übertragung zwischen 80 % und 95 % der Leuchtstärke des ersten Lichtstrahls (12A) durch die Durchgänge (14) hindurch zu ermöglichen, wobei das Fokussiermittel (26)
- eine erste dioptrische Optik (28), die gegenüber der ersten Lichtquelle (10) angeordnet ist, so daß sich die den ersten Lichtstrahl (12A) bildenden Lichtstrahlen nach der ersten dioptrischen Optik (28) parallel oder im Wesentlichen parallel zueinander ausbreiten, und
- eine zweite dioptrische Optik (36), die zwischen der ersten dioptrischen Optik (28) und dem opaken Bildschirm (4) angeordnet ist, so daß der erste Lichtstrahl (12A) in mehrere Unterlichtstrahlen (44) untergeteilt wird,
aufweist,
**dadurch gekennzeichnet, daß** die zweite dioptrische Optik (36) an ihrer Vorderseite (6) mehrere Vorsprünge (46) aufweist, wobei jeder Vorsprung einen Durchgang (14) des opaken Bildschirms (4) ausfüllt.

2. Signalisierungsvorrichtung (2A, 2B, 2C, 2D, 2E) gemäß Anspruch 1, **dadurch gekennzeichnet, daß** das Fokussiermittel (26) dazu ausgelegt ist, den ersten Lichtstrahl (12A) in mehrere einzelne Unterlichtstrahlen (44) zu zerteilen, und daß jeder Unterlichtstrahl (44) in einem Durchgang (14) zusammenläuft.

3. Signalisierungsvorrichtung (2A, 2B, 2C, 2D, 2E) gemäß Anspruch 2, **dadurch gekennzeichnet, daß** jeder Unterlichtstrahl (44) unter einem Konvergenzwinkel zwischen 3° und 45°, vorzugsweise zwischen 5° und 25°, an einem Eingang (16) eines Durchgangs (14) zusammenläuft.

4. Signalisierungsvorrichtung (2A, 2B, 2C, 2D, 2E) gemäß einem der Ansprüche 1 bis 3, **dadurch gekennzeichnet, daß** jeder Durchgang (14) an der Vorderseite (6) des opaken Bildschirms (4) an einem Ausgang (17) mündet und die Gesamtfläche der Ausgänge (17) kleiner als 55 % der Gesamtfläche der Vorderseite (6) ist, vorzugsweise zwischen 20 % und 5 % der besagten Fläche beträgt.

5. Signalisierungsvorrichtung (2A, 2B, 2C, 2D, 2E) gemäß Anspruch 4, **dadurch gekennzeichnet, daß** die größte Abmessung jedes Ausgangs (17) zwischen 0,05 mm und 2 mm, vorzugsweise zwischen 0,1 mm und 0,3 mm, beträgt.

6. Signalisierungsvorrichtung (2A, 2B, 2C, 2D, 2E) gemäß einem der Ansprüche 1 bis 5, **dadurch gekennzeichnet, daß** der Abstand zwischen den Mittelpunkten zweier benachbarter Ausgänge (17) zwischen 0,1 mm und 6 mm, vorzugsweise zwischen 0,3 mm und 0,9 mm beträgt.

7. Signalisierungsvorrichtung (2A, 2B, 2C, 2D, 2E) gemäß einem der Ansprüche 1 bis 6, **dadurch gekennzeichnet, daß** jeder Unterlichtstrahl (44) in einen Durchgang (14) paßt.

8. Signalisierungsvorrichtung (2A, 2B, 2D, 2E) gemäß einem der Ansprüche 1 bis 7, **dadurch gekennzeichnet, daß** die erste dioptrische Optik (28) eine von der ersten Lichtquelle (10) beleuchtete Rückseite (30) aufweist, die mindestens eine Fresnel-Linse (34) aufweist, die auf eine die erste Lichtquelle (10) bildende Leuchtvorrichtung zentriert ist.

9. Signalisierungsvorrichtung (2C) gemäß einem der Ansprüche 1 bis 8, **dadurch gekennzeichnet, daß** die erste dioptrische Optik (28) und die zweite dioptrische Optik (36) ein einziges Teil (26A) bilden.

10. Signalisierungsvorrichtung (2A, 2B, 2D, 2E) gemäß einem der Ansprüche 1 bis 9, **dadurch gekennzeichnet, daß** der opake Bildschirm (4) aus mehreren Unterbildschirmen (4A, 4B, 4C, 4D) zusammengesetzt ist, die vorzugsweise so gegeneinander versetzt sind, daß die Vorderseite (6) des opaken Bildschirms ein Relief aufweist.

11. Signalisierungsvorrichtung (2D, 2E) gemäß einem der Ansprüche 1 bis 10, **dadurch gekennzeichnet, daß** sie einen Lichtleiter (50) aufweist, der gegenüber der Vorderseite (6) des opaken Bildschirms (4) so angeordnet ist, daß die erste Lichtquelle (10) den Lichtleiter beleuchten kann, und daß der Lichtleiter (50) durchsichtig ist.

12. Signalisierungsvorrichtung (2D, 2E) gemäß Anspruch 11, **dadurch gekennzeichnet, daß** die Vorderseite (6) des opaken Bildschirms (4) von heller Farbe ist und eine diffuse Reflexion eines vom Lichtleiter (50) kommenden Lichts fördert, wobei die Vorderseite (6) des Reflexionsschirms vorzugsweise von weißer Farbe und mattem Aussehen ist.

13. Kraftfahrzeug mit einer Signalisierungsvorrichtung (2A, 2B,2C, 2D, 2E) gemäß einem der Ansprüche 1 bis 12.

## Claims

1. A signalling device (2A, 2B, 2C, 2D, 2E) for a motor vehicle, comprising an opaque screen (4) including passages (14) connecting a front face (6) to a rear face (8) of said screen, a first light source (10) capable of emitting a first light beam (12A) illuminating several passages (14) at the rear face (8) of the opaque screen (4), a means (26) for focusing the first light beam (12A), interposed between the first light source (10) and the opaque screen (4), to allow the transmission of 80% to 95% of the light intensity of the first light beam (12A) through the passages (14), the means (26) for focusing the first light beam (12A) comprising:
- a first optical diopter (28), arranged opposite the first light source (10), so that the light rays composing the first light beam (12A) propagate parallel or substantially parallel to each other, downstream from the first optical diopter (28); and
- a second optical diopter (36), arranged between the first optical diopter (28) and the opaque screen (4), so as to split the first light beam (12A) into several sub-light beams (44),
**characterized in that**, the second optical diopter (36) includes several protrusions (46), at its front face (6), each protrusion occupying a passage (14) of the opaque screen (4)

2. The signalling device (2A, 2B, 2C, 2D, 2E) according to the claim 1, **characterized in that** the focusing means (26) is configured to split the first light beam (12A) into several distinct sub-light beams (44), and each sub-light beam converges into a passage (14).

3. The signalling device (2A, 2B, 2C, 2D, 2E) according to claim 2, **characterized in that** each sub-light beam converges to an inlet (16) of a passage (14), according to an angle of convergence comprised between 3° and 45°, preferably between 5° and 25°.

4. The signalling device (2A, 2B, 2C, 2D, 2E) according to one of the claims 1 to 3, **characterized in that** each passage (14) opens to the front face (6) of the opaque screen (4), at an outlet (17), and the total surface area of the outlets (17) is lower than 55 % of the total surface area of the front face (6), preferably between 20 % and 5 % of said surface area.

5. The signalling device (2A, 2B, 2C, 2D, 2E) according to claim 4, **characterized in that** the greatest dimension of each outlet (17) is comprised between 0.05 mm and 2 mm, preferably between 0,1 mm and 0,3 mm.

6. The signalling device (2A, 2B, 2C, 2D, 2E) according to one of the claims 1 to 5, **characterized in that** the distance between the centre of two adjacent outlets (17) is comprised between 0,1 mm and 6 mm, preferably between 0,3 mm and 0,9 mm.

7. The signalling device (2A, 2B, 2C, 2D, 2E) according to one of the claims 1 to 6, **characterized in that** each sub-light beam (44) is inscribed in a passage (14).

8. The signalling device (2A, 2B, 2D, 2E) according to one of the claims 1 to 7, **characterized in that** the first optical diopter (28) has a rear face (30), illuminated by the first light source (10), including at least one Fresnel lens (34) centred to a luminous device composing the first light source (10).

9. The signalling device (2C) according to one of the claims 1 to 8, **characterized in that** the first optical diopter (28) and the second optical diopter (36) form a single part (26A).

10. The signalling device (2A, 2B, 2C, 2D, 2E) according to one of the claims 1 to 9, **characterized in that** the opaque screen (4) is composed of several sub-screens (4A, 4B, 4C, 4D), preferably offset between each other so that the front face (6) of the opaque screen is in relief.

11. The signalling device (2D, 2E) according to one of the claims 1 to 10, comprising a light guide (50), arranged opposite the front face (6) of the opaque screen (4), so that the first light source (10) can illuminate said light guide, and in that the light guide (50) is translucent.

12. The signalling device (2D, 2E) according to the claim 11, **characterized in that** the front face (6) of the opaque screen (4) is light-coloured and favours a diffuse reflection of a light coming from the light guide (50), preferably the front face (6) of the reflection screen is of white colour and matt appearance.

13. A motor vehicle comprising a signalling device (2A, 2B, 2C, 2D, 2E) according to one of the claims 1 to 12.
